# EUROPÄISCHE PATENTSCHRIFT

(11) **EP 0 462 471 B1**
(45) Veröffentlichungstag und Bekanntmachung des Hinweises auf die Patenterteilung: **11.09.1996**
(21) Anmeldenummer: 91109404.3
(22) Anmeldetag: 08.06.1991
(51) Int. Cl.: C08L 75/04

(54) **Verwendung von thermoplastischen Zusammensetzungen aus Polyurethanen und partiell vernetzten Alkylacrylatcopolymeren**
Use of thermoplastic compositions of polyurethanes and partially crosslinked alkylacrylate copolymers
Utilisation de compositions thermoplastiques de polyuréthanes et copolymères d'alkylacrylate réticulés partiellement

(30) Priorität: 21.06.1990 DE 4019799
(43) Veröffentlichungstag der Anmeldung: 27.12.1991
(73) Patentinhaber: BAYER AG, 51368 Leverkusen (DE)
(72) Erfinder: Piejko, Karl-Erwin, Dr., W-5060 Bergisch Gladbach 2 (DE); Orthmann, Ernst, Dr., W-4047 Dormagen (DE); Lindner, Christian, Dr., W-5000 Köln 80 (DE); Braese, Hans-Eberhard, Dipl.-Ing., W-5000 Köln 71 (DE)

(56) Entgegenhaltungen:
- EP-A- 0 012 417
- EP-A- 0 153 587
- EP-A- 0 320 946
- EP-A- 0 322 632
- EP-A- 0 337 187
- EP-A- 0 384 233
- DE-A- 3 811 899
- GB-A- 2 021 600

## Beschreibung

Die Erfindung betrifft thermoplastische Zusammensetzungen aus Polyurethanen und Alkylacrylatcopolymeren.

Die erfindungsgemäßen Zusammensetzungen eignen sich zur Herstellung von Folien, Dichtungen, Beschichtungen, Spritzguß- und Extrusionskörpern und lassen sich auch gut über Kalandrier- oder Tiefziehverfahren verarbeiten, wobei beispielsweise Kunststoff-Kaschier-Folien mit komfortablem Aussehen und Griff herstellbar sind. Solche Folien haben große Bedeutung im KFZ-Innenbereich, Dekorbereich, Möbel-, Bausektor oder als Lederimitat. Bisher enthalten derartige Materialien häufig Polyvinylchlorid im Gemisch mit anderen Poylmerisaten oder Weichmachern und sind demnach zumeist halogenhaltig. Sie enthalten weiterhin häufig flüchtige, zur Migration neigende Komponenten (Weichmacher, Stabilisatoren, Verarbeitungshilfsmittel). Aus ökologischen Gründen (Wiederverwertbarkeit, Abfallentsorgung, Schadstoffemission im Brandfall) werden neuerdings halogenfreie Ersatzmaterialien gefordert. Die migrationsfähigen Komponenten der bekannten Materialien führen darüber hinaus zu einem unbefriedigendem Alterungsverhalten bei Wärmeeinwirkung. Aus diesen Gründen ist es verständlich, daß ein Bedarf nach neuen Kunststoffmaterialien besteht, die PVC-haltige Formmassen ablösen können.

In der EP-A 322 632 und der EP-A 337 187 werden hierfür Polymerisatmischungen aus Pfropfpolymerisaten auf Acrylatbasis, Alkylacrylat-Copolymerisat und Harz-Copolymerisaten vorgeschlagen.

Polymermischungen mit Polyurethanen sind bereits teilweise bekannt.

Aus GB-A-2 021 600 sind Mischungen aus thermoplastischen Polyurethanen und ABS bekannt. Nachteilig hieran ist eine geringe Alterungs- und Hydrolysestabilität. Die Formmassen eignen sich nicht zur Herstellung von weichen, flexiblen Folien.

Aus der EP-A-12 416 (=US-A-4317890) sind thermoplastische Zusammensetzungen aus Polyurethanen und Kautschukpfropfcopolymeren bekannt, z.B. aus Acrylatkautschuk und Pfropfmonomeren wie Styrol, α-Methylstyrol und Acrylnitril. Nachteilig an der Verwendung derartiger Pfropfcopolymerer ist eine Störung der Oberflächen bei Verwendung höherer Gehalte, so daß sich keine weichen, flexiblen Folien herstellen lassen.

Die EP-A 320 946 lehrt, daß thermoplastische Polyurethane schlagzähmodifiziert werden können durch Zusatz von ABS-, MBS- und Alkylacrylatkautschuken.

Aus der EP-A-12 417 (=US-A-4500671) sind thermoplastische Chemiewerkstoffe aus thermoplastischem Polyurethan, faserartigen Verstärkungsmitteln und eines polaren Polymerisates bekannt. Das polare Polymerisat enthält polare und unpolare Monomereinheiten wie Acrylsäurealkylester, Methacrylsäurealkylester, Acrylnitril, Styrol und α-Methylstyrol und Butadien-Isopren und/oder Acrylsäureestereinheiten. Das polare Polymerisat kann vorliegen als Homopolymerisat, Copolymerisat oder Pfropfcopolymerisat. Vernetzte polare Polymerisate sind nicht bevorzugt. Nachteilig an diesen Zusammensetzungen ist, daß die polaren Polymerisate zu alterungs- und hydrolyseempfindlichen Formmassen führen, die zudem bei höheren Gehalten gestörte Oberflächen und einen unästhetischen gummiartigen Griff aufweisen.

Aufgabe der Erfindung war es, thermoplastische Zusammensetzungen mit verbesserten Oberflächen, verbesserter Verarbeitbarkeit durch Kalandrieren und Tiefziehen und einem für Lederersatzzwecke ansprechenden Eigenschaftsprofil mit ästhetischem Griff und einer Narbenstandfestigkeit bereitzustellen.

Gegenstand der Erfindung ist die Verwendung thermoplastischer Zusammensetzungen, enthaltend
ein thermoplastisches Polyurethan A) und
ein wenigstens partiell vernetztes, nicht gepfropftes Alkylacrylatpolymer B) mit einer mittleren Teilchendurchmesser von 0,07 bis 0,5 µm, hergestellt aus einer Mischung von
   B1) 50 bis 90 Gew.-% eines C₁-C₆-Alkylacrylats und
   B2) 50 bis 10 Gew.-% Acrylnitril, Styrol, Vinylacetat und/oder C₁-C₆-Alkylmethylacrylat, unter Zusatz von
   B3) vernetzenden Monomeren, die wenigstens 2 Allyl- und/oder Vinylgruppen aufweisen,
   sowie gegebenenfalls zusätzlich als Komponente C) mindestens ein Polymer aus der Gruppe
   C1) eines thermoplastischen Pfropfproduktes aus einer als Pfropfgrundlage dienenden Kautschukkomponente mit einer Einfriertemperatur kleiner als 0°C (bestimmt nach DIN 53 445), und wenigstens einem Pfropfmonomeren aus der Reihe Styrol, α-Methylstyrol, Acrylnitril und C₁-C₆-Alkylmethacrylat und
   C2) eines kautschukfreien Harzcopolymeren aus Styrol oder α-Methylstyrol mit Acrylnitril,
als kalandrier- und tiefziehfähige Formmassen zur Herstellung von Kunststoff-Kaschier-Folien.

Es können selbstverständlich Mischungen unterschiedlicher thermoplastischer Polyurethane A), unterschiedlicher Alkylacrylatcopolymerer B) und Gemische unterschiedlicher Komponenten B1) und B2) verwendet werden.

In einer bevorzugten Ausführungsform sind 90 - 10 Gew.-Teile A), insbesondere 90 - 50 Gew.-Teile A) und 10 - 90 Gew.-Teile B), insbesondere 10 - 50 Gew.-Teile B), bezogen auf A) und B), enthalten. Die Komponente B) ist vorzugsweise mit vernetzenden Vinyl- oder Allylmonomeren vernetzt. In einer bevorzugten Ausführungsform ist zusätzlich wenigstens ein weiteres Polymer C) enthalten, ausgewählt aus
C1) einem thermoplastischen Pfropfprodukt aus vorzugsweise 30 - 80 Gew.-% einer als Pfropfgrundlage dienenden Kautschukkomponente mit einer Einfriertemperatur unter 0° C und 70 -20 Gew.-% wenigstens eines Pfropfmonomeren aus der Reihe Styrol, α-Methylstyrol, Acrylnitril und C₁-C₆-Alkylmethacrylat und/oder
C2) einem kautschukfreien Harzcopolymeren auf Basis von Styrol oder α-Methylstyrol und Acrylnitril.

Der Gelgehalt des Copolymeren B) beträgt vorzugsweise wenigstens 60, insbesondere wenigstens 70 Gew.-%, bestimmt nach M. Hoffmann et. al., Polymeranalytik I + II, Georg Thieme Verlag, Stuttgart (1977).

Die mittlere Teilchengröße der Copolymeren B) beträgt vorzusgweise 0,07 - 0,5 µm (d₅₀-Wert).

Die Komponente C) wird vorzusgweise in Mengen von 5 - 200, insbesondere 10 - 100 Gew.-%, bezogen auf die Summe der Komponenten A) und B), zugesetzt. Besonders bevorzugte Formmassen enthalten als Komponente C) eine Mischung von Pfropfprodukt C1) und einem Thermoplasten C2) aus der Reihe Styrol- oder α-Methylsytrol-Copolymerisate. In diesen C1) und C2) enthaltenden Formmassen sind insbesonders 10 - 50 Gew.-% A) enthalten bezogen auf die Summe A) + B) + C).

Die thermoplastischen Polyurethane (Komponente A)) sind an sich bekannt und werden nach Verfahren des Standes der Technik hergestellt. Sie sind im allgemeinen aus langkettigen Polyolen vom Molekulargewicht 400 - 10.000, Diisocyanaten und Kettenverlängerungsmitteln (vorzugsweise kurzkettigen Polyolen) vom Molekulargewicht bis zu 400 aufgebaut, wobei das NCO/OH-Verhältnis in der Regel bei 0,95 bis 1,10 liegt.

Als im wesentlichen lineare Polyole mit Molekulargewichten zwischen 400 und 10.000, bevorzugt zwischen 800 und 6.000, kommen praktisch alle an sich bekannten, vorzugsweise 2, gegebenenfalls - in untergeordneten Mengen - auch 3, zerewitinoffaktive Gruppen (im wesentlichen Hydroxylgruppen) enthaltenden Polyester, Polylactone, Polyether, Polythioether, Polyesteramide, Polycarbonate, Polyacetale, Vinylpolymere wie z.B. Polybutadiendiole, bereits Urethan- oder Harnstoffgruppen enthaltende Polyhydroxylverbindungen, gegebenenfalls modifizierte natürliche Polyole, sowie auch andere zerewitinoffaktive Gruppen wie Amino-, Carboxyl- oder Thiolgruppen enthaltende Verbindungen in Betracht. Diese Verbindungen entsprechen dem Stand der Technik und werden z.B. in den DE-Offenlegungschriften 23 02 564, 24 23 764 und 25 49 372 (US-Patent 3 963 679) und 24 02 840 (US-Patent 3 984 607) sowie der DE-AS 24 57 387 (US-Patent 4 035 213) eingehend beschrieben. Bevorzugt sind hydroxylgruppenhaltige Polyester aus Glykolen bzw. Adipinsäure, Phthal- und/oder Terephthalsäure sowie deren Hydrierungsprodukten, Hydroxylpolycarbonate, Polycaprolactone, Polyethylenoxid, Polypropylenoxid, Polytetrahydrofuran und Mischpolyether aus Ethylenoxid und Propylenoxid.

Zu verwendende Diisocyanate sind die an sich bekannten aliphatischen, cycloaliphatischen, aromatischen, araliphatischen und heterocyclischen Diisocyanate des Standes der Technik, wie sie z.B. in den bereits genannten DE-Offenlegungsschriften 23 02 564, 24 23 764, 25 49 372, 24 02 840 und 24 57 387 beschrieben sind. Bevorzugte Diisocyanate sind gegebenenfalls durch Methylgruppen substituiertes Hexamethylendiisocyanat, Isophoronodiisocyanat und 4,4'-Diisocyanatodiphenylmethan.

Die genannten Diisocyanate können gegebenenfalls zusammen mit bis zu ca. 15 Mol % (bezogen auf Diisocyanat) eines höherfunktionellen Polyisocyanats eingesetzt werden; die Menge des höherfunktionellen Polyisocyanats muß jedoch so begrenzt werden, daß ein noch schmelzbares bzw. thermoplastisches Produkt erhalten wird. Eine größere Menge an höherfunktionellen Isocyanaten muß im allgemeinen durch die Mitverwendung von im Durchschnitt weniger als difunktionellen Hydroxyl- bzw. Aminoverbindungen (bzw. auch Monoisocyanaten) ausgeglichen werden, so daß eine zu weit gehende chemische Vernetzung des Produkts vermieden wird. Es ist aber selbstverständlich auch möglich, die Reaktion so zu führen, daß eine nachträgliche chemische Vernetzung des Elastomeren während der Lagerung eintritt (z.B. durch Verwendung eines Überschusses an NCO-Gruppen enthaltenden Verbindungen). Beispiele für höherfunktionelle Isocyanate und monofunktionelle Verbindungen sind ebenfalls dem oben zitierten Stand der Technik zu entnehmen. Beispielsweise seien Monoamine wie Butyl- und Dibutylamin, Octylamin, Stearylamin, N-Methylstearylamin, Pyrrolidin, Piperidin und Cyclohexylamin sowie Monoalkohole wie Butanol, 1-Ethylhexanol, Octanol, Dodecanol, Amylalkohole, Cyclohexanol und Ethylenglykolmonoethylether erwähnt.

Auch die einzusetzenden Kettenverlängerungsmittel sind an sich bekannt und z.B. in DE-A 23 02 564, 24 23 764, 25 49 372, 24 02 799, 24 02 840 und 24 57 387 beschrieben. Es sind dies niedermolekulare Polyalkohole (vorzugsweise Glykole), Polyamine, Hydrazine und Hydrazide. Auch Aminoalkohole wie Ethanolamin, Diethanolamin, N-Methyldiethanolamin, Triethanolamin und 3-Aminopropanol kommen erfindungsgemäß in Frage. Bevorzugte Kettenverlängerunsmittel sind Ethylenglykol, Di- und Triethylenglykol, 1,2-Propandiol, 1,3- und 1,4-Butandiol, 1,6-Hexandiol, 2-Ethylhexandiol-(1,3), 2,2-Dimethylpropandiol, 1,4-Bis-hydroxy-methylcyclohexan und Hydrochinondihydroxyethylether. Besonders bevorzugt sind Hydrochinondi-β-hydroxyethylether, 1,4-Butandiol und 1,6-Hexandiol.

Die Polymerkomponente B) stellt ein Copolymer aus C₁-C₆-Alkylacrylatmonomeren B1) (insbesondere Propyl-, Butyl-, Hexylacrylat) und Comonomeren B2) aus der Reihe Styrol, Acrylnitril, Vinylacetat oder C₁-C₆-Alkkylmethacrylat (insbesondere aus Acrylnitril, Methylmethacrylat) dar. Die Monomeren B1) sind in Mengen von 50-90 Gew.-%, insbesondere 60-80 Gew.-%, die Monomere B2) in Mengen von 50-10 Gew.-%, insbesondere 40-20 Gew.-% enthalten. Diese Polymere sind teilchenförmig und besitzen eine mittlere Teilchengröße von 0,07 - 0,5 µm, insbesondere 0,1 - 0,3 µm und sind partiell vernetzt, Diese Vernetzung wird realisiert durch vernetzende Copolymerisation der Monomere B1) und B2) mit Vernetzungsmonomeren B3), d.h. Monomeren, die wenigstens 2 Allyl- und/oder Vinylgruppen im Molekül tragen. Diese vernetzenden Monomere werden bevorzugt in Einsatzmengen von 0,1 - 5 Gew.-%, bezogen auf die Gewichtssummen (B1) + B2) + B3)) eingesetzt. Typische Vertreter solcher Vernetzungsmonomere B3) sind Divinylbenzol, Glykol-bis-acrylate, Glykol-bis-methacrylate, Bisacrylamide, Phosphorsäuretriallylester, Zitronensäuretriallylester, Allylester von (Meth)Acrylsäure, Triallylcyanurat, Triallyl-iso-cyanurat; die vernetzenden Monomere sind bekannt.

Bevorzugte Komponenten B) sind vernetzte feinteilige Acrylatcopolymerkautschuke aus C₃-C₆-Alkylacrylat als B1) (wie z.B. Propyl-, Butyl-, Pentyl-, Hexyl-acrylat) und wenigstens einem Monomeren aus der Reihe Acrylnitril, Vinylacetat, C₁-C₆-Alkylmethacrylat, insbesondere Acrylnitril und Methylmetharylat als B2) und besitzen Teilchengrößen von vorzugsweise 0,07 -0,5 µm, insbesondere 0,1 - 0,3 µm).

Die Polymerisate B) werden hergestellt, indem die Monomermischungen in wäßriger, radikalischer Emulsionspolymerisation im Temperaturbereich von 40 -90° C unter Zuhilfenahme von üblichen Radikalinitiatoren und Polymerisationshilfsmitteln (Emulgatoren) polymerisiert werden. Bei der Polymerisation fallen die Polymerisate in Form von Emulsionen (Latices) an mit den genannten mittleren Teilchengrößen, Gelgehalt sowie Latex-Polymerkonzentration von 20 - 50 Gew.-%.

Unter Alkylacrylatcopolymeren B) werden im Sinne dieser Erfindung derartige Copolymere verstanden, die - jedenfalls im wesentlichen - nicht gepfropft sind.

Geeignete Pfropfprodukte C) werden in an sich bekannter Weise erhalten, indem man die zu pfropfenden Monomere in Gegenwart einer in einem separaten Polymerisationsschritt hergestellten Elastomerkomponente polymerisiert. Die Herstellung der Pfropfprodukte kann nach den bekannten Polymerisationsverfahren des Standes der Technik erfolgen. Hierzu gehören die Emulsions-, die Suspensions- und die Masse-Polymerisation sowie Kombinationen aus diesen Verfahren. Bevorzugt werden die Pfropfprodukte durch Emulsionspolymerisation hergestellt.

Die als Pfropfgrundlage dienende Elastomerkomponente ist ein kautschukartiges Polymerisat mit einer Einfriertemperatur T_{G} von < 0° C (DIN 53 445), insbesondere <-30°C. Bevorzugt sind 1,3-Dien- und Acrylatkautschuke; besonders bevorzugt sind Butadien- und/oder Isopren-Polymerisate mit bis zu 30 Gew.-% Styrol und/oder Acrylnitril sowie Homo- und Copolymerisate aus Butadien und den oben genannten Acrylsäurealkylestern sowie C₂-C₆-Alkylacrylatkautschuke.

Werden die Pfropfprodukte durch Emulsionspolymerisation hergestellt, so sollte die Teilchengröße der Pfropfgrundlage (gemeint ist der Teilchendurchmesser d₅₀, d.h. der mittlere Durchmesser, unterhalb und oberhalb dessen jeweils 50 % der Teilchen liegen) bevorzugt im Bereich von 0,05 bis 0,8 µm liegen. Die Pfropfgrundlage ist vernetzt; bevorzugt sind Produkte mit einem Gelgehalt >50 %.

Als zu pfropfende Monomere kommen Styrol, α-Methylstyrol, Acrylnitril und C₁-C₆-Alkylmethacrylat in Betracht; vorzugsweise Acrylnitril-haltige Monomerkombinationen.

Das Gewichtsverhältnis von Pfropfgrundlage zu Pfropfmonomeren liegt in der Regel zwischen 30:70 und 80:20, bevorzugt sind Gewichtsverhältnisse zwischen 50:50 und 75:25. Es ist auch möglich, Mischungen mehrerer Pfropfprodukte einzusetzen, wobei jedes Pfropfprodukt für sich den genannten Bedingungen genügt.

Die erfindungsgemäß geeigneten Pfropfpolymerisate sind z.B. aus DE-A-37 42 103 oder DE-A-38 11 899 bekannt.

Werden die Pfropfpolymerisate über Emulsionspolymerisation hergestellt, so werden die anfallenden Latices üblicherweise durch bekannte Koagulationsprozesse oder Sprühtrocknung zu Pulvern oder Granulat aufgearbeitet.

Eine bevorzugte Verfahrensweise arbeitet mit Kombinationen der Komponenten B) und C): Da beide als wäßrige Emulsion anfallen können, ist es vorteilhaft, die Latexmischung direkt einer Koagulation zu unterwerfen und dabei die Mischung von B) und C) beispielsweise als Pulvermischung zu isolieren. Der Einsatz so gewonnener Pulvermischungen aus B) und C) zur Herstellung der erfindungsgemäßen Kompositionen ist bevorzugt, da sich Vorteile im Dispergierverhalten der Komponenten A, B, C ineinander ergeben. Die Pulverkombination aus B) und C) fungiert somit als Präcompound für die erfindungsgemäße Polyurethanformmasse.

Die erfindungsgemäßen Formmassen lassen sich nach unterschiedlichen Verfahren herstellen:

### Verfahren 1:

Die einzelnen, separaten Produkte A, B und gegebenenfalls C werden über übliche Compoundieraggregate wie Kneter, Schnecken, Extruder compoundiert, ("Dry-Blending") granuliert und danch zu Formkörpern weiterverarbeitet; dieses Verfahren arbeitet also in der bekannten Art und Weise der Kunststoff-Blend-Technologie.

### Verfahren 2:

Bei dieser Variante werden die Komponenten B und C über die oben erwähnten Latexmischungsaufarbeitung zu einem Pulverblend bzw. Granulatblend aufgearbeitet. Diese Mischung wird nachfolgend im Sinne des Verfahrens 1 mit dem Polyurethan compoundiert. Vorteile dieses Verfahrens sind weniger Mengenströme an zu dosierenden Produkten während der Compoundierung sowie größere Fahrsicherheit und Qualitätskonstanz der resultierenden Polyurethanblends.

### Verfahren 3:

In diesem Fall arbeitet man, indem das Polyurethan erst in Gegenwart der Komponente B und C erzeugt wird ("Wet-Blending"). Diese Vorgehensweise ist bekannt aus DE-A-28 54 409; die verarbeitungs- und anwendungstechnischen Eigenschaften der erfindungsgemäßen Formmassen lassen sich mit Hilfe des Verfahrens 3 steigern.

Obwohl alle genannten Verfahrensweisen hochwertige Polymerblends erbringen, ist Verfahren 2 und 3 im Sinne der Erfindung bevorzugt; besonders bevorzugt ist Verfahren 3.

### Beispiele:

A) Verwendete Polyurethantypen:
A1) Das Polyurethan wird hergestellt durch Umsetzung folgender Komponenten in Schneckenmaschinen bei Temperaturen von 100 bis 300°C (Angaben in Gew.-Teilen):
   Aa) 45,47 Teile 4,4'-Diphenylmethandiisocyanat
   Ab) 14,03 Teile Butandiol-1,4
   Ac) 40,1 Teile eines Adipinsäure/Butandiol-Polyesters (OH-Zahl 65)
      0,2 Teile Stearylamid
      0,2 Teile 2,6-Di-tert-butyl-4-methylphenol
      0,2 Teile 2,2'-6,6'-Tetraisopropyldiphenylcarbodiimid (NCO/OH-Verhältnis = 1,03)

Es wird ein Thermoplast erhalten, der folgende Eigenschaften aufweist:

| | | |
|---|---|---|
| Shore Härte D | DIN 53 505 | 80 |
| Reißdehnung [%] | DIN 53 504 | 323 |
| Kerbschlagzähigkeit (-40°C) [kJ/m²] | DIN 53 453 | 3,1 |
| Vicattemperatur Meth. A/120°C [°C] | DIN 53 460 | 155 |

A2) Das Polyurethan wird hergestellt durch Umsetzung folgender Komponenten in Schneckenmaschinen bei Temperaturen von 100 bis 300°C (Angaben in Gew.-Teilen):
   Aa) 19,6 Teile 4,4'-Diphenylmethandiisocyanat
   Ab) 7,2 Teile Hydrochinondihydroxyethylether
   Ac) 72,6 Teile eines Adipinsäure/Neopentylglykol-Polyesters
      0,2 Teile Stearylamid
      0,2 Teile 2,6-Di-tert-butyl-4-methylphenol
      0,2 Teile 2,2'-6,6'-Tetraisopropyldiphenylcarbodiimid (NCO/OH-Verhältnis = 1,03)

Es wird ein Thermoplast erhalten, der folgende Eigenschaften aufweist:

| | | |
|---|---|---|
| Shore Härte A | DIN 53 505 | 80 |
| Reißfestigkeit [MPa] | DIN 53 504 | 32 |
| Reißdehnung [%] | DIN 53 504 | 630 |
| Elastizität [%] | DIN 53 512 | 32 |

A3) Das Polyurethan wird hergestellt durch Umsetzung folgender Komponenten in Schneckenmaschinen bei Temperaturen von 100 bis 300°C (Angaben in Gew.-Teilen):
Aa) 35,65 Teile 4,4'-Diphenylmethandiisocyanat
Ab) 6,75 Teile Butandiol-1,4
Ac) 28,5 Teile eines Polypropylenoxiddiols (M = 2000 g/Mol)
   28,5 Teile eines Polycarbonatdiols (M = 2000 g/Mol)
   0,2 Teile Stearylamid
   0,2 Teile 2,6-Di-tert-butyl-4-methylphenol
   0,2 Teile 2,2'-6,6'-Tetraisopropyldiphenylcarbodiimid (NCO/OH-Verhältnis = 1,03)

A4) Das Polyurethan wird hergestellt durch Umsetzung folgender Komponenten in Schneckenmaschinen bei Temperaturen von 100-300°C (Angaben in Gew.-Teilen)
Aa) 32,8 Teile 4,4'-Diphenylmethandiisocyanat
Ab) 6,6 Teile Butandiol-1,4
Ac) 60 Teile eines Polytetrahydrofurandiols
   0,2 Teile Stearylamid
   0,2 Teile 2,6-Di-tert-butyl-4-methylphenol
   0,2 Teile 2,2'-6,6'-Tetraisopropyldiphenylcarbodiimid (NCO/OH-Verhältnis = 1,03)

B) Verwendete Acrylatcopolymere, hergestellt nach EP 32 1832
B1) Emulsionscopolymerisat aus 30 Gew.-% Acrylnitril, 70 Gew.-% n-Butylacrylat, vernetzt durch Copolymerisation mit 0,45 Gew.-%, bezogen auf 100 Teile der Gesamtsumme aus Acrylnitril und Butylacrylat, Triallylcyanurat. Das Polymerisat wurde erzeugt durch radikalische, wäßrige Emulsionspolymerisation mit Na-Salzen von C₁₄-C₁₆-Alkylsulfonsäuren als Emulgator. Das Polymerisat besitzt einen Gelgehalt von 92 Gew.-% und eine mittlere Teilchengröße (d₅₀) von 0,12 µm. Die Emulsionspolymerisate B werden durch gemeinsame Koagulation mit 10 Gew.-% eines Styrol/Acrylnitrilemulsionspolymerisates (Monomerverhältnis 72/28) aufgearbeitet.
C) Verwendete Pfropfpolymerisate
C1) Pfropfpolymerisate aus 15 Gew.-% eines grobteiligen Polybutadiens mit einem mittleren Teilchendurchmesser (d₅₀) von 0,4 µm und einem Gelgehalt (in Toluol) von 89 Gew.-% und 15 Gew.-% eines feinteiligen Polybuatdiens mit einem mittleren Teilchendurchmesser (d₅₀) von 0,1 µm und einem Gelgehalt von 90 Gew.-% und 70 Gew.-% pfropfpolymerisierter Monomerer aus 66 Gew.-% Styrol und 34 Gew.-% Acrylnitril (bezogen auf 100 Teile der Pfropfmonomermischung), hergestellt durch radikalische Emulsionspolymerisation eines Styrol/Acrylnitril-Gemisches in Gegenwart der Polybutadienlatices.
C2) Pfropfpolymerisat aus 60 Gew.-Teilen eines grobteiligen Acrylatkautschuks eines mittleren Teilchendurchmesser (d₅₀) von 0,50 µm und einem Gelgehalt (in Dimethylformamid) von 95 Gew.-% (hergestellt durch vernetzende Copolymerisation von n-Butylacrylat/Triallylcyanurat gemäß EP-A 34 748) und 40 Gew.-Teilen pfropfpolymerisierter Monomerer aus 72 Gew.-% Styrol und 28 Gew.-% Acrylnitril hergestellt durch radikalische Emulsionspolymerisation in Gegenwart des Acrylatkautschuklatex. Das Pfropfpolymerisat C2) wird durch gemeinsame Koagulation mit 20 Gew.-% eines Styrol/Acrylnitrilemulsionspolymerisates (Monomerverhältnis 72/28) aufgearbeitet.
D) Herstellung der Formmassen
Bei den Beispielen wird eine Zweiwellenschneckenknetmaschine des Typs ZSK 53 V der Fa. Werner & Pfleiderer, Stuttgart, mit selbstreinigendem Wellenbesatz und einem Knetelementanteil von ca. 20 % verwendet. Der Verfahrensteil besteht aus 12 separat heizbaren Gehäusen, die Länge des Verfahrensteils entspricht etwa dem 20-fachen Wellendurchmesser.
Die Verweilzeiten der Reaktionsschmelze in der Schneckenmaschine betragen in der Regel 0,3 bis 30, bevorzugt 0,5 bis 4 Minuten. Die Temperaturen der Schneckengehäuse liegen zwischen etwa 60 und 300°C (ca. 80 bis 280°C) in der Einzugszone; ca, 100 bis 300°C in der Mitte des Extruders und ca. 120 bis 250°C in der Austragszone). Die aus dem Extruder austretende Schmelze wird nach an sich bekannten Verfahren abgeschreckt und zerkleinert. Die Herstellung der thermoplastischen Polyurethanelastomeren erfolgt in den bei A) angegebenen Gewichtsteilen.
Die Komponente Ac) (mit Additiven) wird aus dem 120°C heißen Vorlagekessel über eine Zahnradpumpe in das Gehäuse 1 einer Zweiwellenknetmaschine eindosiert, Ebenfalls in das Gehäuse 1 wird über eine Zahnradpumpe das Diolgemisch Ab) mit einer Temperatur von 60°C dosiert. Die Komponente Aa) wird mit 60°C über eine Zahnradpumpe ebenfalls in das Gehäuse 1 gepumpt. An der Schneckenmaschine wurden folgende Gehäusetemperaturen eingestellt:

| | | | | | | | |
|---|---|---|---|---|---|---|---|
| Gehäuse | 1 | 2/3 | 4/5 | 6/7 | 8/9 | 11/12 | Kopf |
| Temperatur | 80°C | 200°C | 200°C | 200°C | 220°C | 200°C | 240°C |

Das komplett ausreagierte thermoplastische Polyurethan, Komponente A, wird über eine Schüttelrinne in die ZSk-53 in das Gehäuse 1 eindosiert. Die kein Polyurethan enthaltenden Thermoplaste bzw. deren Gemische (Komponente B und gegebenenfalls C) werden über eine Schüttelrinne in die Schneckenmitte eingebracht. An der Schneckenmaschine wurden folgende Gehäusetemperaturen eingestellt:

| | | | | | | | |
|---|---|---|---|---|---|---|---|
| Gehäuse | 1 | 2/3 | 4/5 | 6/7 | 8/9 | 11/12 | Kopf |
| Temperatur | 80°C | 200°C | 200°C | 200°C | 220°C | 200°C | 240°C |

Die aus dem Extruder austretende Schmelze wird nach an sich bekannten Verfahren abgeschreckt und zerkleinert.

Die Zusammensetzung der erfindungsgemäßen Formmassen und der Vergleichsformmassen sind in Tabelle 1 aufgeführt.

Wie aus der Tabelle hervorgeht, weisen die erfindungsgemäßen Formmassen ein ansprechendes Profil anwendungstechnischer Grundeigenschaften auf. Wichtige Vorteile gegenüber einer Formmasse aus 100 Gew.-Teilen der Komponente A (also ohne die Komponenten gemäß der Erfindung) sind: Besonders guter Schmelzfluß bei Verarbeitung, klebfreies Verhalten auf einem Kalander, gute technische Verarbeitung zu Kalanderfolien, die sich über Tiefziehprozesse verarbeiten lassen. Die resultierenden Kalanderfolien besitzen ein verbessertes Aussehen und Griff (für z.B. Lederersatzfolien), d.h. ein unkomfortabler sogenannter "Gummigriff" wird durch die Zusätze B und C beseitigt. Weiterhin lassen sich lederartige Narbenprägungen aufbringen, die eine gute Narbenstandfestigkeit besitzen. Der Zusatz eines handelsüblichen Nitrilkautschuks aus Butadien/Acrylnitril-Copolymerisat (30 Gew.-% Acrylnitril) zu einem Polyurethan (Beispiel 3, Vergleich) führt neben der niedrigen Erweichungstemperatur zu Licht- und Hydrolyse-instabilen Formmassen. Wird der Anteil des Nitrilkautschuks analog Beispiel 2 erhöht (50 Gew.-%), so entsteht eine Formmasse mit rauher Oberfläche und gummiartigem Griff.

Die Formmassen 6-11 werden jeweils einem Tiefziehversuch unterworfen:

### Tiefziehversuch

Eine auf der Walze hergestellte Folie (Länge 300 mm, Breite 300 mm, Dicke 1mm) wird in eine Tiefziehform eingespannt und auf 160° C bzw. 175° C Oberflächentemperatur erhitzt (Bestimmung der Oberflächentemperatur mittels Schmelzsalz). Ein Kegelstumpf gemäß Figur 1 der DE-A-38 11 899 wird unter Anlegen eines Vakuums 21 cm tief in die Folie hineingedrückt. Es werden bei 175° C, bzw. 160° C Oberflächentemperatur jeweils dem Kegelstumpf entsprechende Hohlkörper gleichmäßiger Wandstärke erhalten.

Die Beispiele 8-10 zeigen, daß durch den Zusatz eines Polyurethans zu einer bekannten, als Lederersatzmaterial geeigneten Formmasse (Vergleichsbeispiel 11) die mechanischen Eigenschaften wie Weichheit, Dehnbarkeit und Festigkeit verbessert werden. Die Tiefziehbarkeit bleibt erhalten.

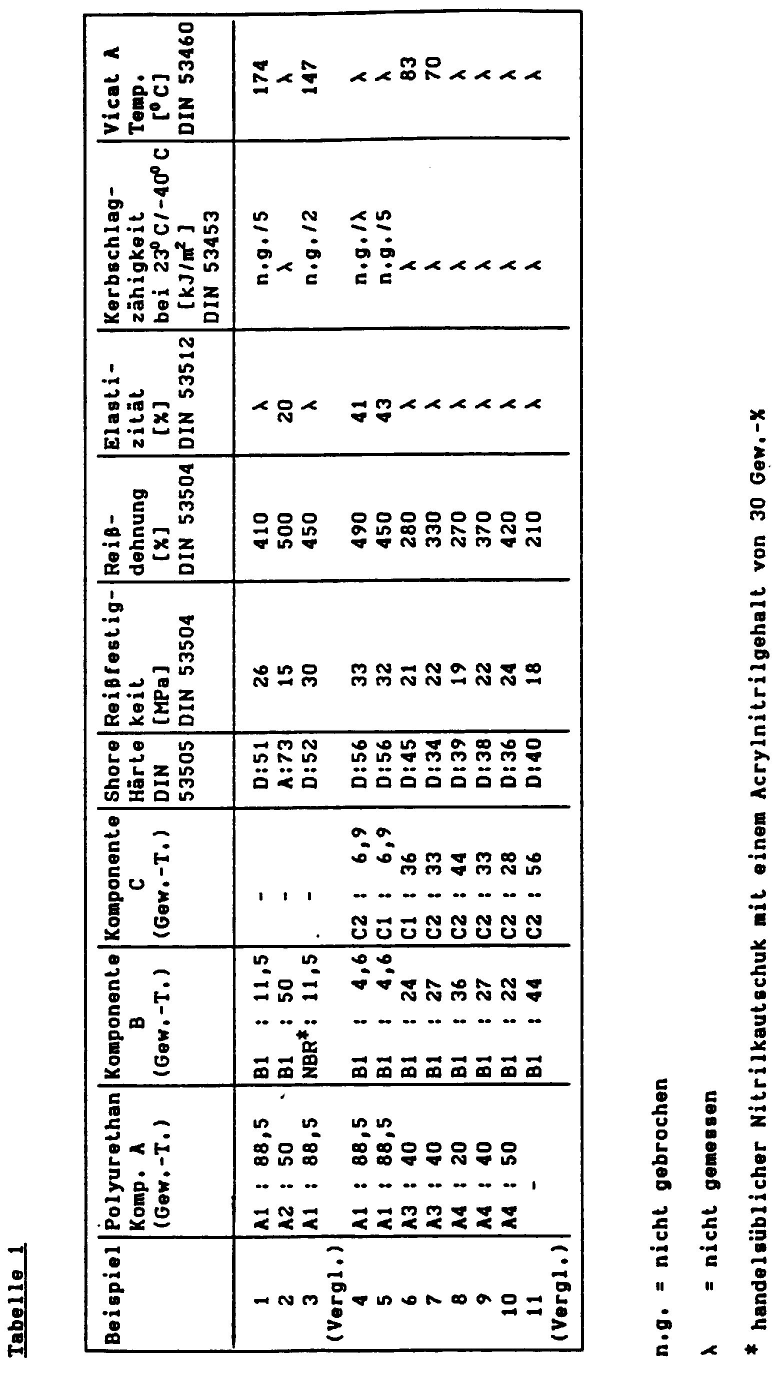

## Patentansprüche

1. Verwendung thermoplastischer Zusammensetzungen, enthaltend ein thermoplastisches Polyurethan A) und
ein wenigstens partiell vernetztes, nicht gepfropftes Alkylacrylatpolymer B) mit einem mittleren Teilchendurchmesser von 0,07 bis 0,5 µm, hergestellt aus einer Mischung von
B1) 50 bis 90 Gew.-% eines C₁-C₆-Alkylacrylats und
B2) 50 bis 10 Gew.-% Acrylnitril, Styrol, Vinylacetat und/oder C₁-C₆-Alkylmethacrylat, unter Zusatz von
B3) vernetzenden Monomeren, die wenigstens 2 Allyl- und/oder Vinylgruppen aufweisen,
als kalandrier- und tiefziehfähige Formmassen zur Herstellung von Kunststoff-Kaschier-Folien.

2. Verwendung thermoplastischer Zusammensetzung gemäß Anspruch 1,
die zusätzlich als Komponente C) mindestens ein Polymer aus der Gruppe
C1) eines thermoplastischen Pfropfproduktes aus einer als Pfropfgrundlage dienenden Kautschukkomponente mit einer Einfriertemperatur kleiner als 0°C (bestimmt nach DIN 53 445), und wenigstens einem Pfropfmonomeren aus der Reihe Styrol, α-Methylstyrol, Acrylnitril und C₁-C₆-Alkylmethacrylat und
C2) eines kautschukfreien Harzcopolymeren aus Styrol oder α-Methylstyrol mit Acrylnitril enthalten,
als kalandrier- und tiefziehfähige Formmassen zur Herstellung von Kunststoff-Kaschier-Folien.

## Claims

1. Use of thermoplastic compositions containing a thermoplastic polyurethane A) and
an at least partially crosslinked, ungrafted alkyl acrylate polymer B) having an average particle diameter of 0.07 to 0.5 µm, produced from a mixture of
B1) 50 to 90 wt.% of a C₁-C₆ alkyl acrylate and
B2) 50 to 10 wt.% of acrylonitrile, styrene, vinyl acetate and/or C₁-C₆ alkyl methacrylate with the addition of
B3) crosslinking monomers having at least 2 allyl and/or vinyl groups
as calenderable and thermoformable moulding compositions for the production of laminated plastic films.

2. Use of a thermoplastic composition according to claim 1,
which additionally contains as component C) at least one polymer from the group
C1) a thermoplastic graft product prepared from a rubber component having a glass transition temperature of less than 0°C (determined to DIN 53 445), which acts as the grafting backbone, and at least one graft monomer from the range styrene, α-methylstyrene, acrylonitrile and C₁-C₆ alkyl methacrylate and
C2) a rubber-free resin copolymer prepared from styrene or α-methylstyrene with acrylonitrile,
as calenderable and thermoformable moulding compositions for the production of laminated plastic films.

## Revendications

1. Utilisation de compositions thermoplastiques contenant un polyuréthanne thermoplastique A) et
un polymère d'acrylate d'alkyle B), non greffé, réticulé en partie au moins, à un diamètre moyen de particule de 0,07 à 0,5 µm, préparé à partir d'un mélange de
B1) 50 à 90 % en poids d'un acrylate d'alkyle en C₁-C₆ et
B2) 50 à 10 % en poids d'acrylonitrile, de styrène, d'acétate de vinyle et/ou de méthacrylates d'alkyle en C₁-C₆, avec adjonction de
B3) des monomères réticulants contenant au moins deux groupes allyle et/ou vinyle, en tant que matières à mouler aptes au calandrage et à l'emboutissage pour la fabrication de feuilles de doublage en résines synthétiques.

2. Utilisation d'une composition thermoplastique selon revendication 1 contenant en outre, en tant que composant C), au moins un polymère du groupe suivant:
C1) un produit de greffage thermoplastique consistant en un composant caoutchouc servant de support de greffage, à une température de transition du second ordre inférieure à 0°C (détermination selon norme allemande DIN 53 445) et au moins un monomère greffé du groupe formé par le styrène, l'α-méthylstyrène, l'acrylonitrile et un méthacrylate d'alkyle en C₁-C₆ et
C2) un copolymère résineux, exempt de caoutchouc, du styrène ou de l'α-méthylstyrène et de l'acrylonitrile,
en tant que matières à mouler aptes au calandrage et à l'emboutissage pour la fabrication de feuilles de doublage en résines synthétiques.
